# EUROPÄISCHE PATENTSCHRIFT

(11) **EP 2 636 343 B1**
(45) Veröffentlichungstag und Bekanntmachung des Hinweises auf die Patenterteilung: **18.06.2014**
(21) Anmeldenummer: 12158249.8
(22) Anmeldetag: 06.03.2012
(51) Int. Cl.: A47J 31/44

(54) **Vorrichtung und Verfahren zum Herstellen von Milchschaum und/oder erwärmter Milch**
Device and method for producing milk foam and/or heated milk
Dispositif et procédé de fabrication de mousse de lait et/ou de lait chauffé

(43) Veröffentlichungstag der Anmeldung: 11.09.2013
(73) Patentinhaber: Delica AG, 4127 Birsfelden (CH)
(72) Erfinder: Brönnimann, Markus, 3274 Hermrigen (CH); Affolter, Roland, 5103 Möriken-Wildegg (CH); Anderson, Mark, 8800 Thalwil (CH)
(74) Vertreter: Hepp Wenger Ryffel AG

(56) Entgegenhaltungen:
- WO-A1-2010/100170
- WO-A2-2005/102126
- DE-A1- 4 445 436
- US-A1- 2006 230 943

## Beschreibung

Die Erfindung betrifft eine Vorrichtung und ein Verfahren zum Herstellen von Milchschaum und/oder erwärmter Milch gemäss dem Oberbegriff der unabhängigen Ansprüche.

Eine derartige Vorrichtung kann beispielsweise dazu verwendet werden, Milchschaum oder auch erwärmte Milch für Kaffeegetränke wie etwa Cappuccino oder Latte Macchiato herzustellen. Die Vorrichtung kann beispielsweise als Einzelmaschine oder auch als Teil einer Anordnung mit einer Kaffeemaschine ausgestaltet sein.

Vorrichtungen und Verfahren zum Herstellen von Milchschaum oder auch erwärmter Milch sind seit längerer Zeit aus dem Stand der Technik bekannt. Eine derartige Vorrichtung zum Herstellen von Milchschaum wird beispielsweise in der WO 2010/100170 beschrieben. In diesem Dokument wird eine Vorrichtung zum Herstellen von Milchschaum mit einem Dampferzeuger offenbart, der an einer Dampfleitung angeschlossen ist. In dieser Dampfleitung ist eine sich verengende und dann wieder erweiternde Düse angeordnet, sodass Milch aus einem Milchbehälter angesaugt werden kann. Zudem wird mittels einer Luftpumpe Luft in die Dampfleitung gefördert, sodass mittels des Dampf-Luft-Gemischs und der angesaugten Milch ein Milchschaum gebildet wird.

Es ist ein Bedürfnis, Schwankungen des Verhältnisses von Dampfmenge zu zugeführter Luftmenge bei einer Variierung der zugeführten Dampfmenge zu vermeiden, um die Qualität des erzeugten Milchschaums möglichst konstant halten zu können, was bei der Verwendung einer Pumpe mit im Wesentlichen konstanter Pumpleistung nicht immer gewährleistet werden kann. Hierdurch ergibt sich also eine Schwankung der Eigenschaften des erzeugten Milchschaums und unter Umständen sogar ein instabiles Verhalten der Vorrichtung bei der Herstellung von Milchschaum.

Es ist daher eine Aufgabe der vorliegenden Erfindung, die Nachteile des Bekannten zu vermeiden und insbesondere eine Vorrichtung der eingangs genannten Art zu schaffen, mit der die Luftzufuhr für die Milchschaumerzeugung auf einfache Art und Weise variiert werden kann und eine erhöhte Stabilität der Milchschaumerzeugung bei unbeabsichtigten Schwankungen einzelner Betriebsparameter erreicht wird.

Diese Aufgaben werden erfindungsgemäss mit einer Vorrichtung und einem Verfahren mit den Merkmalen der unabhängigen Ansprüche gelöst.

Die erfindungsgemässe Vorrichtung zum Herstellen von Milchschaum und/oder erwärmter Milch umfasst eine Dampfzufuhrleitung mit einer Dampfzufuhröffnung. Die Dampfzufuhrleitung weist eine sich verengende erste Düse auf zur Erzielung eines Saugeffekts zur Ansaugung von Milch an einer in der ersten Düse angeordneten Saugöffnung. Der Dampf wird insbesondere mittels eines insbesondere steuerbaren Dampferzeugers erzeugt. Weiter weist die Vorrichtung eine Luftzufuhreinrichtung zur Zufuhr von Luft in die Dampfzufuhrleitung durch eine Luftzufuhröffnung auf. Die Dampfzufuhrleitung weist eine sich verengende zweite Düse zur Erzielung eines Saugeffekts an der in der zweiten Düse angeordneten Luftzufuhröffnung auf. Die Luftzufuhröffnung ist also mit anderen Worten im Bereich der zweiten Düse angeordnet. Die erste Düse ist stromabwärts der zweiten Düse bezogen auf die Dampfströmungsrichtung angeordnet.

Im Betrieb wird also beispielsweise mittels eines insbesondere steuerbaren Dampferzeugers Dampf erzeugt und durch die Dampfzufuhröffnung in die Dampfzufuhrleitung gefördert. Diese Dampfzufuhrleitung weist eine erste Düse mit einer Saugöffnung auf zur Ansaugung von Milch. Zudem weist die Dampfzufuhrleitung eine zweite Düse auf mit einer Luftzufuhröffnung, die mit einer Luftzufuhreinrichtung in Fluidverbindung steht zur Zufuhr von Luft durch die Luftzufuhröffnung in die Dampfzuführleitung. Die zweite Düse ist so ausgestaltet, dass ein Saugeffekt an der Luftzufuhröffnung erzielt wird zur Zuführung von Luft, insbesondere zur Unterstützung der Zufuhr von Luft durch die Luftzufuhreinrichtung.

Insbesondere weist die erste Düse einen Milchzufuhrkanal auf, der in die in einem ersten Düsenkanal der ersten Düse angeordnete Saugöffnung mündet. Unter dem ersten Düsenkanal der ersten Düse wird im Sinne der vorliegenden Anmeldung der Kanal der ersten Düse verstanden, durch den bei bestimmungsgemässem Gebrauch der Dampf oder das Dampf-Luft-Gemisch, insbesondere zur Ansaugung von Milch, gefördert wird.

Unter einer sich verengenden Düse wird im Sinne der vorliegenden Anmeldung ein Abschnitt der Dampfzufuhrleitung verstanden, der einen kleineren Querschnitt als die stromaufwärts der Düse angeordnete Dampfzufuhrleitung aufweist, wobei sich in und / oder nach dem sich verengenden Querschnitt ein Unterdruck bildet, welcher den Saugeffekt erzeugt. Vorteilhaft wird die Düse stromabwärts der engsten Stelle der sich verengenden Düse wieder erweitert, insbesondere auf den Querschnitt der Dampfzufuhrleitung stromaufwärts der sich verengenden Düse. Die sich verengende Düse kann beispielsweise als Abschnitt der Dampfzufuhrleitung ausgebildet sein oder lösbar mit der Dampfzufuhrleitung verbunden sein.

Unter einer Luftzufuhreinrichtung wird im Sinne der vorliegenden Anmeldung eine, insbesondere steuerbare und/oder regelbare, Einrichtung zur, insbesondere aktiven und / oder passiven, Zufuhr von Luft in die Dampfzufuhrleitung verstanden. Bei der Luftzufuhreinrichtung kann es sich beispielsweise um eine Luftpumpe, insbesondere eine Membranpumpe oder auch eine Verdichterluftpumpe, handeln. Die Luftpumpe kann steuerbar und/oder regelbar sein. Alternativ kann die Luftzufuhreinrichtung ein steuerbares und/oder regelbares Ventil umfassen, sodass durch den erzeugten Saugeffekt in der zweiten Düse Luft in Abhängigkeit von der Ventilstellung in variierbarer Menge in die Dampfzufuhrleitung angesaugt wird. Weiter alternativ kann die Luftzufuhreinrichtung als zur Umgebung offene Öffnung ausgebildet sein. Die Luftpumpe und / oder das Ventil sind mit der Luftzufuhröffnung in die Dampfzufuhrleitung beispielsweise mittels eines Schlauches, eines Rohrs, eines Kanals, Ventilen oder aber auch direkt mit der Luftzufuhröffnung verbindbar. Die zur Umgebung offene Öffnung ist mit der Luftzufuhröffnung beispielsweise mittels eines Schlauches, eines Rohrs oder eines Kanals verbindbar.

Insbesondere weist die Verwendung einer Pumpe zur Luftzuführung den Vorteil auf, dass die Temperatur und / oder die Menge des Milchschaums steuerbar und / oder regelbar sind. Weiterhin erlaubt die Verwendung einer Pumpe zur Luftzuführung eine zeitabhängige Luftzuführung, so dass beispielsweise in Abhängigkeit des herzustellenden Getränks wie Latte Macchiato erst erwärmte Milch und anschliessend Milchschaum herstellbar ist.

Ein weiterer Vorteil der Verwendung einer Pumpe zur Luftzuführung ist die mögliche Minimierung oder auch Verhinderung eines Rücklaufs von erwärmter Milch oder Milchschaum in die zweite Düse nach dem Abschalten der Dampfzufuhr, was zu einer Verschmutzung schwer zugänglicher Teile der Vorrichtung führen könnte, was die Reinigung schwierig macht. Somit kann beispielsweise verhindert werden, dass sich durch kondensierenden Dampf ein Unterdruck stromaufwärts der ersten Düse bildet und Dampf-Luft-Gemisch mit Milch stromaufwärts gefördert wird, da die Luft auch nach dem Abschalten der Dampfzufuhr weiter zugeführt werden kann. So kann die sich noch in der Vorrichtung befindliche erwärmte Milch und / oder der Milchschaum aus der Vorrichtung gefördert werden.

Die Zufuhr von Luft mittels einer Luftzufuhreinrichtung in die Dampfzufuhrleitung im Bereich der zweiten Düse hat den Vorteil, dass durch den in der Düse erzeugten Saugeffekt die Luftzufuhr unterstützt wird, wodurch beispielsweise der Einsatz günstigerer Pumpen mit geringerer Pumpleistung möglich wird. Zudem führt diese Ausgestaltung der Vorrichtung zu dem vorteilhaften Effekt, dass bei Schwankungen beispielsweise des zugeführten Volumenstroms an Dampf der Saugeffekt durch die zweite Düse variiert und somit das Verhältnis von Dampfmenge zu Luftmenge in dem Dampf-Luft-Gemisch vergleichmässigt wird und damit auch die Menge an angesaugter Milch. Somit wird die Qualität des erzeugten Milchschaums vergleichmässigt, d. h. Schwankungen in der Schaumqualität werden minimiert.

Die Anordnung der zweiten Düse stromaufwärts der ersten Düse hat den Vorteil, dass eine Schwankung des Volumenstroms des Dampfes zuerst zu einer entsprechenden Anpassung der zugeführten Luftmenge führt, wobei dadurch die angesaugte Milchmenge in der ersten Düse durch das Dampf-Luft-Gemisch ebenfalls entsprechend variiert wird, sodass im Wesentlichen das Verhältnis zwischen Dampfmenge, Luftmenge und Milchmenge im Gemisch konstant bleibt. Dadurch wird die Variabilität der Qualität des erzeugten Milchschaums verringert.

Bevorzugt weist die erste Düse an der engsten Stelle einen Querschnitt senkrecht zur Dampfströmungsrichtung grösser als die zweite Düse an der engsten Stelle auf. Insbesondere weist die erste Düse einen grösseren Durchmesser als die zweite Düse an der engsten Stelle auf.

Dies hat den Vorteil einer weiter erhöhten Stabilität der Milchschaumerzeugung, was zu einer verbesserten Qualität des erzeugten Milchschaums führt. Vorteilhaft kann die erhöhte Stabilität durch die kostengünstige und im Betrieb zuverlässig funktionierende konstruktive Ausgestaltung der Grössenverhältnisse der Querschnitte erreicht werden.

Insbesondere liegt das Verhältnis der Durchmesser der zweiten Düse und der ersten Düse an der engsten Stelle im Bereich von 0.85 bis 0.95, vorzugsweise im Bereich von 0.891 bis 0.901, vorzugsweise bei ca. 0.896.

Insbesondere weist die erste Düse im Bereich ihrer engsten Stelle einen Durchmesser zwischen 0.5 und 2.5 mm, bevorzugt zwischen 1.25 mm und 1.65 mm, vorzugsweise ca. 1.45 mm auf.

Zudem weist insbesondere die zweite Düse im Bereich ihrer engsten Stelle einen Durchmesser zwischen 0.5 und 2.4 mm, bevorzugt zwischen 1.1 mm und 1.5 mm, vorzugsweise ca. 1.3 mm auf.

Ausserdem ist es zweckmässig, wenn die Milchzufuhrleitung zur ersten Düse einen Querschnitt zwischen 0.5 und 2.5 mm², vorzugsweise ca. 1.25 mm² aufweist. Es ist ausserdem zweckmässig, wenn die erste Düse einen Auslaufdurchmesser zwischen 2 und 15 mm, vorzugsweise ca. 6 mm bis 8 mm aufweist. Damit ist eine gute Schaumverteilung unabhängig von der Tassengrösse gewährleistet.

Die Luftzufuhr in die Dampfzufuhrleitung erfolgt besonders vorteilhaft über eine schlitzförmige Luftzufuhröffnung, vorzugsweise mit einer Breite des Schlitzes zwischen 0.2 mm und 2 mm, vorzugsweise ca. 0.5 mm. Diese Luftzufuhröffnung kann auch jede beliebige andere geometrische Form aufweisen.

Die Milchzufuhr in die Dampfzufuhrleitung, insbesondere für die Milchschaumherstellung, erfolgt besonders vorteilhaft über eine insbesondere kreisförmige Saugöffnung, vorzugsweise mit einem Querschnitt zwischen 0.19 mm² und 5 mm², bevorzugt zwischen 1.3 mm² und 2.2 mm² und besonders bevorzugt von etwa 1.5 mm² bis 2.1 mm². Eine kreisförmige Saugöffnung weist entsprechend einen Durchmesser zwischen 0.5 mm und 2.5 mm auf, vorzugsweise ca. 1.4 mm bis 1.6 mm. Diese Saugöffnung kann auch jede beliebige andere geometrische Form aufweisen.

Bevorzugt weist, bei Zuführung eines Dampf-Luft-Gemischs mit im Wesentlichen konstantem Volumenstrom, die erste Düse geeignet zur Herstellung von erwärmter Milch eine Saugöffnung auf mit einem Querschnitt kleiner als eine erste Düse geeignet zur Herstellung von Milchschaum. Insbesondere weist die Saugöffnung einen Querschnitt zwischen 0.19 mm² und 5 mm², bevorzugt zwischen 0.75 mm² und 1.15 mm² und besonders bevorzugt von etwa 0.95 mm². Eine kreisförmige Saugöffnung weist entsprechend einen Durchmesse zwischen 0.5 mm und 2.5 mm auf, vorzugsweise ca. 1.1 mm.

Dies hat den Vorteil, dass beispielsweise eine Düse geeignet zur Herstellung von Milchschaum durch eine Düse geeignet zur Herstellung von erwärmter Milch ausgetauscht werden kann, was einfach in der Handhabung ist und zu einem stabileren Verhalten der Vorrichtung bei der Herstellung von Milchschaum oder der Herstellung von erwärmter Milch führt.

Die Ausgestaltung der Saugöffnung der ersten Düse für die Herstellung von erwärmter Milch bei Zuführung eines Dampf-Luft-Gemischs mit im Wesentlichen konstantem Volumenstrom kann der Fachmann mit Routineversuchen, ausgehend von einer Düse geeignet zur Herstellung von Milchschaum, ermitteln, da die Saugöffnung geeignet zur Herstellung von erwärmter Milch einen kleineren Querschnitt der Saugöffnung aufweist.

Insbesondere weist die erste Düse eine Saugöffnung auf mit einem variablen Querschnitt der Saugöffnung. Bevorzugt ist der Querschnitt an der ersten Düse einstellbar, insbesondere in einem Bereich von 0.19 mm² und 5 mm² und bevorzugt von 0.75 mm² und 2.1 mm².

Die Einstellbarkeit des Querschnitts der Saugöffnung ist beispielsweise mit einer einstellbaren Blende erzielbar, die in der Saugöffnung angeordnet ist. Alternativ zur Blende können auch ein Schieber oder andere, dem Fachmann bekannte Mittel verwendet werden.

Besonders bevorzugt umfasst die Luftzufuhreinrichtung eine Luftpumpe, die insbesondere als eine Membranluftpumpe ausgebildet ist. Diese Luftpumpe weist insbesondere eine variierbare Pumpleistung auf.

Dies hat den Vorteil, dass durch Variierung der Pumpleistung die zugeführte Luftmenge in die Dampfzufuhrleitung variiert wird, was zu einer Änderung der Konsistenz beziehungsweise Qualität des Milchschaums führt. Dadurch ist es möglich, die Eigenschaften des Milchschaums und/oder der erwärmten Milch den Anforderungen des entsprechenden Getränks einfach anzupassen.

Ganz besonders bevorzugt umfasst die Luftzufuhreinrichtung ein steuerbares und/oder regelbares Ventil zur Variierung der Menge der zuführbaren Luft.

Dies hat den Vorteil, dass durch den in der zweiten Düse erzeugten Saugeffekt die Luft angesaugt wird und die in die Dampfzufuhrleitung geförderte Luftmenge durch die Stellung des Ventils gesteuert und/oder geregelt werden kann. Dies führt zu einer kostengünstigen Ausgestaltung der Vorrichtung bei geringem Energieverbrauch.

Es ist auch denkbar, eine Luftzufuhreinrichtung umfassend eine Luftpumpe und ein steuerbares und/oder regelbares Ventil zu verwenden. Hierdurch ergibt sich die Möglichkeit der flexiblen Einstellung der zugeführten Luftmenge durch Variieren der Pumpleistung der Luftpumpe und durch Einstellen des Ventils.

Bevorzugt ist die Saugöffnung im Wesentlichen im Bereich der engsten Stelle der ersten Düse angeordnet.

Dies hat den Vorteil, dass in diesem Bereich der erzeugte Saugeffekt am Grössten ist und damit eine grössere Menge Milch angesaugt werden kann, welche unter anderem dadurch eine höhere Geschwindigkeit in der Dampfzufuhrleitung aufweisen kann, wodurch unter Umständen eine bessere Vermischung gewährleistet ist.

Unter dem "Bereich der engsten Stelle einer Düse" wird im Sinne der vorliegenden Anmeldung ein Bereich entlang des Düsenkanals verstanden, indem ein genügender Unterdruck zur Erzeugung des Saugeffekts für Milch und / oder Luft erreichbar ist. Insbesondere umfasst der Bereich der engsten Stelle einer Düse den Bereich mit dem engsten Querschnitt der Düse und zudem stromaufwärts und stromabwärts das Dreifache der kleinsten Ausdehnung senkrecht zur den Saugeffekt erzeugenden Strömung, bevorzugt das Zweifache der kleinsten Ausdehnung und besonders bevorzugt die kleinste Ausdehnung. Insbesondere wird dieser Bereich bestimmt in Strömungsrichtung des Dampfes vom Anfangspunkt und Endpunkt der engsten Stelle entlang der Achse des Düsenkanals. Beispielsweise ist die kleinste Ausdehnung bei einem im Querschnitt kreisförmigen Kanal der kleinste Durchmesser d; das Dreifache der kleinsten Ausdehnung ist der dreifache Durchmesser; der Bereich der engsten Stelle der Düse umfasst den dreifachen Durchmesser stromaufwärts und den dreifachen Durchmesser stromabwärts, berechnet vom Anfangspunkt und Endpunkt der engsten Stelle des Düsenkanals entlang der Achse des Düsenkanals; gesamthaft hat der Bereich der engsten Stelle der Düse entlang der Achse des Düsenkanals den sechsfachen Durchmesser der engsten Stelle des Düsenkanals plus den Bereich mit dem engsten Querschnitt der Düse entlang der Achse des Düsenkanals.

Ganz besonders bevorzugt ist eine Milchzufuhrleitung mit der ersten Düse derart verbindbar, dass Milch aus einem Milchbehälter mittels des Saugeffekts in die erste Düse durch die Saugöffnung ansaugbar ist.

Dies hat den Vorteil, dass beispielsweise auch separate Milchbehälter mittels der Milchzufuhrleitung mit der ersten Düse verbunden werden können, was die Vorrichtung flexibler und benutzerfreundlicher macht.

Bevorzugt ist die Luftzufuhröffnung im Wesentlichen im Bereich der engsten Stelle der zweiten Düse angeordnet.

Dies hat den Vorteil, dass im Bereich der engsten Stelle der zweiten Düse die Saugwirkung am stärksten und damit auch die angesaugte Luftmenge am grössten ist, wodurch insbesondere die Unterstützung der Zufuhr von Luft durch die Luftzufuhreinrichtung weiter verbessert wird. Zudem wird dadurch die Anpassung der durch den Saugeffekt in die Dampfzufuhrleitung geförderten Luft in Abhängigkeit des möglicherweise variierenden Volumenstroms an Dampf verbessert.

Besonders bevorzugt ist die Luftzufuhreinrichtung als zur Umgebung offene Öffnung ausgebildet. Mit anderen Worten ist kein Steuermittel zur Variierung des Volumenstroms an Luft vorgesehen.

Dies hat den Vorteil einer konstruktiv einfach ausgestalteten und kostengünstigen Luftzufuhreinrichtung.

Insbesondere weist die zweite Düse einen Luftzufuhrkanal auf, der in einen zweiten Düsenkanal der zweiten Düse an der Position der Luftzufuhröffnung mündet. Der Luftzufuhrkanal und der zweite Düsenkanal sind insbesondere im Wesentlichen senkrecht zueinander angeordnet.

Diese Ausgestaltung hat den gleichen Vorteil wie oben bezüglich der Anordnung des Milchzufuhrkanals im ersten Düsenkanal erläutert.

Unter dem zweiten Düsenkanal der zweiten Düse wird im Sinne der vorliegenden Anmeldung der Kanal der zweiten Düse verstanden, durch den bei bestimmungsgemässem Gebrauch der Dampf gefördert wird.

Ganz besonders bevorzugt sind die erste Düse und/oder die zweite Düse als Venturidüse ausgebildet.

Dies hat den Vorteil, dass derartige Venturi-Düsen im Betrieb zuverlässig sind und daher zu einer geringen Variation der Qualität des erzeugten Milchschaums führen.

Bevorzugt ist die Vorrichtung in zwei Teile aufgeteilt, nämlich in eine stationäre Gerätekomponente enthaltend zumindest die Luftzufuhreinrichtung, die zweite Düse und Luftzufuhröffnung und in eine mobile Komponente enthaltend die erste Düse. Die mobile Komponente ist lösbar mit der aus der Gerätekomponente austretenden Dampfzufuhrleitung verbunden.

Die Begriffe "stationär" und "mobil" bedeuten im Sinne der vorliegenden Anmeldung, dass die mobile Komponente von der Gerätekomponente beispielsweise zu Reinigungszwecken gelöst und wieder eingesetzt werden kann, während die stationäre Gerätekomponente immer den gleichen Standort haben kann. Selbstverständlich kann die stationäre Gerätekomponente beweglich sein in dem Sinne, dass die stationäre Gerätekomponente transportabel ist.

Unter dem Begriff Milchzufuhrleitung wird im Sinne der vorliegenden Anmeldung jede feste oder flexible Leitung unabhängig von ihrer Länge verstanden, die in die erste Düse mündet.

Besonders bevorzugt weist die Vorrichtung Steuermittel auf, über die die Luftzufuhreinrichtung und/oder der Dampferzeuger steuerbar sind. Hierdurch kann das Mischungsverhältnis des Dampf-Luft-Gemischs in der Dampfzufuhrleitung vorgegeben oder eingestellt werden.

Unter einem "Steuermittel" wird im Sinne der vorliegenden Anmeldung eine Einrichtung zur Variierung des in die Dampfzufuhrleitung geförderten Volumenstroms an Dampf und/oder des Volumenstroms an Luft verstanden, welcher in die Dampfzufuhrleitung gefördert wird. Dieses Steuermittel kann beispielsweise Mikroprozessoren enthalten und beispielsweise als Steuercomputer ausgebildet sein, der beispielsweise in eine Kaffeemaschine oder auch einen Milchschäumer integriert und / oder mit diesen verbunden ist. Die Zusammensetzung des Dampf-Luft-Gemischs kann dadurch einfach variiert werden, wodurch unterschiedliche Milch- oder Kaffee-Milch-Getränke hergestellt werden können. Zudem kann die Luftzufuhreinrichtung durch die Steuermittel derart angesteuert werden, dass lediglich heisse Milch oder erwärmte Milch hergestellt wird, was durch eine verringerte Luftzufuhr oder eine intermittierende Luftzufuhr erreicht werden kann.

Ganz besonders bevorzugt weist die Vorrichtung Speichermittel auf zur Speicherung zumindest eines Betriebsparameters für zumindest zwei Milchbehandlungsarten, welche durch die Steuermittel verwendbar sind. Insbesondere sind Betriebsparameter wie Dampftemperatur, Feuchtigkeitsgehalt des Dampfes, Volumenstrom des Dampfes, Pumpleistung der Luftzufuhreinrichtung, Pumpleistung der Wasserpumpe, Heizleistung der Dampfheizung oder beliebige Kombinationen daraus speicherbar.

Ein derartiges Speichermittel kann beispielsweise Mikroprozessoren enthalten und als Computer ausgebildet sein. Insbesondere kann das Steuermittel und Speichermittel als ein Modul ausgebildet sein, welches zudem Bedienelemente zur Auswahl der entsprechenden Betriebsparameter und/oder des zu erzeugenden Milch- oder Kaffee-Getränks aufweist.

Dies hat den Vorteil, dass in Abhängigkeit von den Anforderungen des herzustellenden Getränks die Art des zu erzeugenden Milchschaums durch beispielsweise hinterlegte Betriebsparameter auswählbar ist, was die Bedienung vereinfacht.

Bevorzugt weist die Vorrichtung einen Temperatursensor zur Bestimmung der Dampftemperatur vor der Förderung des Dampfes in die Dampfzufuhrleitung auf. Insbesondere ist der Temperatursensor im Dampferzeuger angeordnet. Ausserdem insbesondere ist der Dampferzeuger in Abhängigkeit von der bestimmten Dampftemperatur steuerbar und / oder regelbar.

Dies hat den Vorteil, dass die Dampftemperatur überwachbar ist und eine im Wesentlichen optimale Dampftemperatur für eine Milchschaumerzeugung oder das Herstellen von erwärmter Milch gewährleistet werden kann.

Insbesondere ist der Temperatursensor als Thermistor, bevorzugt als Heissleiter, d.h. als NTC-Thermistor, ausgebildet.

Besonders bevorzugt weist die Vorrichtung einen Drucksensor zur Bestimmung des Dampfdruckes vor der Förderung des Dampfes in die Dampfzufuhrleitung auf.

Dies hat den Vorteil, dass der Dampfdruck überwachbar ist und ein im Wesentlichen optimaler Dampfdruck für eine Milchschaumerzeugung oder das Herstellen von erwärmter Milch gewährleistet werden kann.

Mittels Messung der Parameter Druck und / oder Temperatur des Dampfes vor der Förderung des Dampfes in die Dampfzufuhrleitung und Einstellung dieser Parameter im Dampferzeuger kann vorteilhaft erreicht werden, dass im Wesentlichen trockener Dampf, d.h. überhitzter Dampf, in die Dampfzufuhrleitung gefördert wird, was zu einer verbesserten Qualität des Milchschaums und zu einer verbesserten Stabilität der Milchschaumerzeugung führt.

Ganz besonders bevorzugt weist die Vorrichtung ein steuerbares und / oder regelbares Ventil, insbesondere ein Magnetventil, auf, welches in Abhängigkeit von Druck und / oder Temperatur des Dampfes eine Strömungsverbindung vom Dampferzeuger in die Dampfzufuhrleitung öffnet.

Dies hat den Vorteil der Sicherstellung, dass der in die Dampfzufuhrleitung geförderte Dampf die geforderte Temperatur und den geforderten Druck aufweist.

Bevorzugt weist die Vorrichtung ein Sicherheitsventil, insbesondere ein Überdruckventil, auf, welches derart ausgebildet ist, dass bei einer Zuführung von Dampf mit einem Druck über einem voreingestellten und / oder einstellbaren Schwellwert der Dampf abgeführt wird, insbesondere in einen Auffangbehälter, beispielsweise einen Kondensator. Mit anderen Worten wird der Dampf nicht in die Dampfzufuhrleitung geleitet, wenn der Druck grösser oder gleich dem Schwellwert ist.

Insbesondere ist das Überdruckventil als mechanisches Überdruckventil ausgebildet.

Dies hat den Vorteil der Sicherstellung, das bei einem auftretenden Überdruck in der Vorrichtung der unter Überdruck stehende Dampf abführbar ist und im Wesentlichen nicht in die Dampfzufuhrleitung geleitet wird, was die Sicherheit und Stabilität der Vorrichtung im Betrieb erhöht.

Insbesondere ist das Überdruckventil stromaufwärts des steuerbaren und / oder regelbaren Ventils, welches in Abhängigkeit von Druck und / oder Temperatur des Dampfes eine Strömungsverbindung vom Dampferzeuger in die Dampfzufuhrleitung öffnet, angeordnet.

Dies hat den Vorteil einer vereinfachten und stabilen Steuerung und / oder Regelung der Vorrichtung zur Sicherstellung, dass im Wesentlichen trockener Dampf in die Dampfzufuhrleitung geleitet wird.

Dieser Vorteil kann beispielsweise dadurch erreicht werden, dass in einem ersten Schritt in dem Dampferzeuger durch Aufheizen von Wasser Dampf erzeugt wird, während das Ventil geschlossen ist; somit baut sich ein Überdruck in der Vorrichtung auf, so dass sich das Überdruckventil öffnet und Dampf abgeführt wird; durch weiteres Aufheizen im Dampferzeuger erreicht der Dampf einen voreingestellten und / oder einstellbaren Temperaturschwellwert; beim Erreichen des Temperaturschwellwerts wird das Ventil geöffnet, so dass der Druck in der Vorrichtung abfällt; das Überdruckventil schliesst sich und Dampf mit der gewünschten Temperatur wird in die Dampfzufuhrleitung geleitet zur Herstellung von Milchschaum oder erwärmter Milch.

Besonders bevorzugt ist ein Abschnitt des ersten Düsenkanals der ersten Düse entlang des Düsenkanals, der zumindest den Bereich der Saugöffnung umfasst, exzentrisch zum Düsenkanal stromaufwärts und / oder stromabwärts des Abschnitts angeordnet.

Dies hat den Vorteil der verbesserten und stabileren Milchherstellung. Beispielsweise kann es zu einer Bildung von grossen Blasen im Bereich der Milchansaugung kommen, was zu einer Verringerung der Milchansaugung und damit zu einem qualitativ schlechterem Milchschaum und / oder zu einem instabileren Verhalten der Vorrichtung bei der Milchschaumherstellung führen kann; dies kann vorteilhaft mit der exzentrischen Ausgestaltung vermieden werden.

Die Ausgestaltung einer Düse zur Milchansaugung mit einem abschnittsweise exzentrisch angeordneten Abschnitt zum Düsenkanal stromaufwärts und / oder stromabwärts des Abschnitts kann vorteilhaft auch in Milchschäumern aus dem Stand der Technik verwendet werden; beispielsweise ist die Verwendung der Düse zur Milchansaugung mit einem abschnittsweise exzentrisch angeordneten Abschnitt mit einem Milchschäumer gemäss der WO 2010/100170 A1 denkbar.

Unter einer "exzentrischen Anordnung eines Abschnitts zum Düsenkanal stromaufwärts und / oder stromabwärts des Abschnitts" wird im Sinne der vorliegenden Anmeldung verstanden, dass die Längsachse des Abschnitts senkrecht zur mittleren Strömungsrichtung versetzt ist zur Längsachse des Düsenkanals stromaufwärts und / oder stromabwärts des Abschnitts.

Bevorzugt ist die Exzentrizität so ausgestaltet, dass der Dampfzufuhrkanal stromaufwärts der Saugöffnung abschnittsweise in Umfangsrichtung auf der Innenwand ohne Sprung in den exzentrisch angeordneten Abschnitt, insbesondere in den ersten Düsenkanal, übergeht. Mit anderen Worten sind der Dampfzufuhrkanal stromaufwärts der Saugöffnung und die erste Düse so ausgestaltet, das entlang der Strömungsrichtung die Innenwand in einem Abschnitt in Umfangsrichtung ohne Sprung verläuft.

Unter der "Innenwand" wird die Wand des Dampfzufuhrleitung und der ersten Düse verstanden, die mit dem Dampf-Luft-Gemisch und / oder der Milch bei bestimmungsgemässem Gebrauch in Kontakt steht.

Unter der "Umfangsrichtung" wird im Sinne der vorliegenden Anmeldung die Richtung verstanden, die im Wesentlichen senkrecht zur mittleren Strömungsrichtung liegt. Beispielsweise weist also die Innenwand in Umfangsrichtung in einem ersten Abschnitt keinen Sprung und in einem zweiten Abschnitt einen Sprung auf.

Dies hat den Vorteil, dass durch die Ausgestaltung der Innenwand abschnittsweise ohne Sprung die Strömung weniger verwirbelt wird und dadurch die Milchschaumherstellung verbessert und stabiler wird.

Ein weiterer Aspekt der vorliegenden Erfindung ist gerichtet auf einen Milchschäumer umfassend eine Vorrichtung wie oben beschrieben.

Ein derartiger Milchschäumer ist als eigenständiges Gerät ausgebildet oder beispielsweise mit einer Kaffeemaschine verbindbar und weist unter anderem zusätzlich zur Vorrichtung ein Gehäuse für die Vorrichtung sowie eine entsprechende Stromversorgung auf.

Ein zusätzlicher Aspekt der vorliegenden Erfindung ist gerichtet auf eine Kaffeemaschine umfassend eine Vorrichtung wie oben beschrieben und/oder einen Milchschäumer wie vorgängig beschrieben.

Ein weiterer Aspekt der vorliegenden Erfindung ist gerichtet auf ein Verfahren zum Herstellen von Milchschaum mittels einer oben beschriebenen Vorrichtung. Dieses Verfahren umfasst den Schritt des Erzeugens eines Dampfstroms mittels eines Dampferzeugers. Anschliessend erfolgt ein Leiten des Dampfes durch eine Dampfzufuhröffnung in eine Dampfzufuhrleitung. Vor und/oder nach dem vorstehenden Schritt erfolgt ein Zuführen von Luft in die Dampfzufuhrleitung durch eine Luftzufuhröffnung in eine sich verengende zweite Düse, derart, dass eine Strömung mit im Wesentlichen konstantem Verhältnis von Dampfvolumen zu Luftvolumen erzeugt wird. Anschliessend erfolgt ein Ansaugen von Milch aus einem Milchbehälter in einer sich verengenden ersten Düse, die mittels einer Milchzufuhrleitung mit dem Milchbehälter in Strömungsverbindung steht. Das Ansaugen der Milch erfolgt mittels der zugeführten Strömung. Anschliessend erfolgt ein Herstellen von Milchschaum.

Ein zusätzlicher Aspekt der vorliegenden Erfindung ist gerichtet auf ein Verfahren zum Herstellen von erwärmter Milch mittels einer Vorrichtung wie oben beschrieben. In einem ersten Schritt wird ein Dampfstrom mittels eines Dampferzeugers erzeugt. Anschliessend erfolgt ein Leiten des Dampfes durch die Dampfzufuhröffnung in die Dampfzufuhrleitung. Vor und/oder nach dem vorstehenden Schritt erfolgt ein Zuführen von Luft in die Dampfzufuhrleitung durch eine Luftzufuhröffnung in eine sich verengende zweite Düse mit pulsierendem Volumenstrom. Anschliessend erfolgt ein Ansaugen von Milch aus einem Milchbehälter in einer sich verengenden ersten Düse, die mittels einer Milchzufuhrleitung mit dem Milchbehälter in Strömungsverbindung steht. Das Ansaugen der Milch erfolgt mittels des zugeführten pulsierenden Volumenstroms. Anschliessend erfolgt ein Herstellen von erwärmter Milch.

Unter dem Begriff "pulsierend" wird im Sinne der vorliegenden Anmeldung eine intermittierende und / oder eine im Volumenstrom zeitlich variable Luftzuführung verstanden mit einer Frequenz von zumindest 1 Hz, bevorzugt von zumindest 5 Hz und besonders bevorzugt von zumindest 10 Hz. Die Variierung des Volumenstroms der zugeführten Luft zwischen Minimum und Maximum bezogen auf das Maximum beträgt zumindest 25%, bevorzugt zumindest 50% und besonders bevorzugt zumindest 75%.

Ein weiterer Aspekt der vorliegenden Erfindung ist gerichtet auf ein Verfahren zum Herstellen von erwärmter Milch mit einer Vorrichtung zur Herstellung erwärmter Milch wie oben beschrieben. Dieses Verfahren umfasst den Schritt des Erzeugens eines Dampfstroms mittels eines Dampferzeugers. Anschliessend erfolgt ein Leiten des Dampfes durch eine Dampfzufuhröffnung in eine Dampfzufuhrleitung. Vor und/oder nach dem vorstehenden Schritt erfolgt ein Zuführen von Luft in die Dampfzufuhrleitung durch eine Luftzufuhröffnung in eine sich verengende zweite Düse, derart, dass eine Strömung mit im Wesentlichen konstantem Verhältnis von Dampfvolumen zu Luftvolumen erzeugt wird. Anschliessend erfolgt ein Ansaugen von Milch aus einem Milchbehälter in einer sich verengenden ersten Düse, die mittels einer Milchzufuhrleitung mit dem Milchbehälter in Strömungsverbindung steht. Das Ansaugen der Milch erfolgt mittels der zugeführten Strömung. Anschliessend erfolgt ein Herstellen von erwärmter Milch. Die erste Düse geeignet zur Herstellung von erwärmter Milch weist eine Saugöffnung auf mit einem Querschnitt kleiner als eine erste Düse geeignet zur Herstellung von Milchschaum. Insbesondere weist die Saugöffnung einen Querschnitt zwischen 0.19 mm² und 5 mm², bevorzugt zwischen 0.75 mm² und 1.15 mm² und besonders bevorzugt von etwa 0.95 mm²; eine kreisförmige Saugöffnung weist entsprechend einen Durchmesse zwischen 0.5 mm und 2.5 mm auf, vorzugsweise ca. 1.1 mm.

Dies hat den Vorteil eines konstruktiv einfach ausgestalteten und im Betrieb zuverlässig und stabil funktionierenden Verfahrens zur Herstellung von erwärmter Milch. Insbesondere ist keine zusätzliche Steuerung beispielsweise zur Erzeugung eines pulsierenden Stromes umfassend ein Gemisch aus Luft und Dampf notwendig, was die Vorrichtung kostengünstiger in der Herstellung macht.

Ein weiterer Aspekt betrifft ein Kit zur Verwendung mit einer stationären Gerätekomponente, welche eine zweite Düse umfasst, zur Bildung einer Vorrichtung zum Herstellen von Milchschaum und/oder erwärmter Milch, insbesondere zur Verwendung in einem Verfahren wie oben beschrieben. Das Kit umfasst zumindest eine erste mobile Komponente enthaltend eine erste Düse mit einem Querschnitt einer Saugöffnung zur Ansaugung von Milch und eine zweite mobile Komponente enthaltend eine weitere erste Düse mit einem Querschnitt einer Saugöffnung zur Ansaugung von Milch. Insbesondere sind zumindest eine und bevorzugt beide Saugöffnungen der ersten und zweiten mobilen Komponente im Wesentlichen im Bereich der engsten Stelle der jeweiligen Düse angeordnet. Die Saugöffnung der ersten mobilen Komponente weist einen Querschnitt geeignet zur Herstellung von Milchschaum bei Zuführung eines Dampf-Luft-Gemischs mit im Wesentlichen konstantem Volumenstrom auf. Die Saugöffnung der zweiten mobilen Komponente weist einen Querschnitt geeignet zur Herstellung von erwärmter Milch bei Zuführung eines Dampf-Luft-Gemischs mit im Wesentlichen konstantem Volumenstrom auf. Der Querschnitt der Saugöffnung der zweiten mobilen Komponente ist kleiner als der Querschnitt der Saugöffnung der ersten mobilen Komponente.

Dies hat den Vorteil, dass durch einen Austausch der mobilen Komponenten des Kits an der stationären Gerätekomponente und Zuführen einer Strömung mit im Wesentlichen konstantem Verhältnis von Dampfvolumen zu Luftvolumen entweder Milchschaum oder erwärmte Milch zuverlässig herstellbar ist, ohne das weitere Eingriffe in den Betrieb durch einen Bediener notwendig sind.

Bevorzugt weist die Saugöffnung der ersten mobilen Komponente einen Querschnitt zwischen 0.19 mm² und 5 mm² auf, bevorzugt zwischen 1.3 mm² und 2.2 mm² und besonders bevorzugt von etwa 1.5 mm² bis 2.1 mm²; eine kreisförmige Saugöffnung der ersten mobilen Komponente weist entsprechend einen Durchmesser zwischen 0.5 mm und 2.5 mm auf, vorzugsweise ca. 1.4 mm bis 1.6 mm; bevorzugt weist die Saugöffnung der zweiten mobilen Komponente einen Querschnitt zwischen 0.19 mm² und 5 mm² auf, bevorzugt zwischen 0.75 mm² und 1.15 mm² und besonders bevorzugt von etwa 0.95 mm²; eine kreisförmige Saugöffnung der zweiten mobilen Komponente weist entsprechend einen Durchmesser zwischen 0.5 mm und 2.5 mm auf, vorzugsweise ca. 1.1 mm; der Querschnitt der Saugöffnung der zweiten mobilen Komponente wird so gewählt, dass dieser kleiner als der Querschnitt der Saugöffnung der ersten mobilen Komponente ist.

Weitere Merkmale und Vorteile der Erfindung ergeben sich aus der nachstehenden Beschreibung der Ausführungsbeispiele und aus den Zeichnungen. Es zeigen:
- Figur 1:: schematische Darstellung einer erfindungsgemässen Vorrichtung mit mobiler Komponente und stationärer Gerätekomponente;
- Figur 2:: schematische Darstellung einer erfindungsgemässen Vorrichtung gemäss Figur 1 ohne Aufteilung in eine mobile Komponente und eine stationäre Gerätekomponente;
- Figur 3:: Seitenansicht einer mobilen Komponente einer erfindungsgemässen Vorrichtung mit einem in einer Krümmung angeordneten Milchzufuhrkanal;
- Figur 4:: perspektivische Darstellung eines Teilausschnitts der erfindungsgemässen Vorrichtung gemäss Figur 1;
- Figur 5:: Schnittdarstellung des Bereichs der Luftzuführung gemäss Figur 4;
- Figur 6:: das Detail A der Luftzuführung gemäss Figur 5;
- Figur 7:: Schnittdarstellung der mobilen Komponente der erfindungsgemässen Vorrichtung;
- Figur 8:: perspektivische Darstellung eines erfindungsgemässen Milchschäumers und einer Kaffeemaschine;
- Figur 9:: vergrösserte schematische Darstellung eines Ausschnitts der mobilen Komponente gemäss Figur 7;
- Figur 10:: schematische Darstellung eines erfindungsgemässen Kits umfassend zwei Düsen.

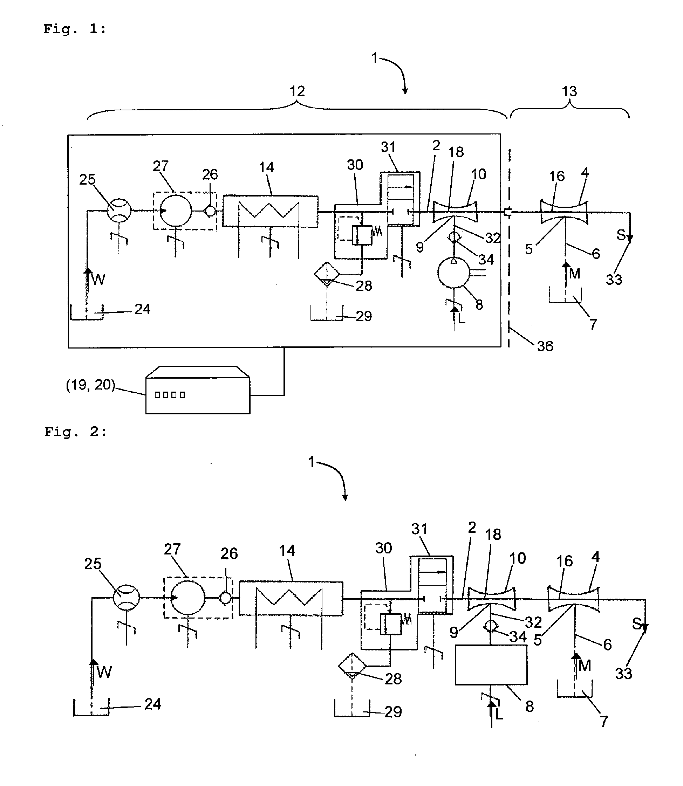

Figur 1 zeigt eine schematische Darstellung einer erfindungsgemässen Vorrichtung 1 zum Herstellen von Milchschaum und/oder erwärmter Milch, aus der der prinzipielle Aufbau und die Funktionsweise der Vorrichtung 1 hervorgeht. Mittels einer Wasserpumpe 27 wird Wasser W aus einem Wasserbehälter 24 entnommen, wobei ein Durchflussmesser 25 steuer- und regeltechnisch mit der Wasserpumpe in Wirkverbindung steht mittels des Steuermittels 19. Mit 26 ist ein Rückschlagventil bezeichnet. Zum Herstellen vom Dampf wird das entnommene Wasser, dessen Fliessrichtung durch den Pfeil angedeutet ist, durch den Dampferzeuger 14 geführt. Mittels des Überdruckventils 30 kann im Fall eines Überdrucks Dampf abgelassen werden, anstatt in die Dampfzufuhrleitung 2 geführt zu werden. Das Überdruckventil 30 fungiert also als mechanischer Drucksensor. Mittels des Kondensators 28 kann der über das Überdruckventil 30 abgeführte Dampf kondensiert und überschüssiges Restwasser in der Restschale 29 aufgefangen werden.

Mittels des Durchflussmessers 25 ist eine Steuerung und / oder Regelung der Wasserpumpe 27 möglich zur Einstellung der geförderten Wassermenge. Hierdurch ist die Dampfmenge einstellbar.

Ein 2/2-Wegeventil 31 ist in der Dampfzufuhrleitung 2 angeordnet, in das der Wasserdampf gefördert wird.

Zur Erzeugung von Wasserdampf wird Wasser oder auch ein WasserDampfgemisch im Dampferzeuger 14 aufgeheizt, während das 2/2-Wegeventil 31 geschlossen ist, so dass kein Wasserdampf in die Dampfzufuhrleitung 2 gefördert wird. Dadurch baut sich ein Druck in der Vorrichtung 1 auf. Wenn der Druck einen Schwellwert von etwa 2.5 bar erreicht, öffnet sich das Überdruckventil 30, so dass Dampf zum Kondensator 28 geführt wird. Das Aufheizen des Wasser-Dampfgemischs im Dampferzeuger 14 wird fortgesetzt. Wenn die Temperatur im Dampferzeuger 14, die mittels eines im Dampferzeuger 14 angeordneten (nicht dargestellten) Temperatursensors gemessen wird, einen Temperaturschwellwert erreicht, wird das 2/2-Wegeventil 31 geöffnet, wodurch der Druck in der Vorrichtung abfällt und das Überdruckventil 30 geschlossen wird. Hierdurch wird erreicht, dass der Dampf die gewünschte Temperatur und den gewünschten Druck für die Herstellung von Milchschaum oder erwärmter Milch aufweist.

Stromabwärts bezogen auf das 2/2-Wegeventil ist eine zweite Düse 10 mit einem zweiten Düsenkanal 18 angeordnet, in den im Bereich der engsten Stelle eine Luftzufuhröffnung 9 mündet. Über diese Luftzufuhröffnung 9 kann mittels der Luftzufuhreinrichtung 8, die als Membranpumpe ausgebildet ist, Luft L entlang des angedeuteten Pfeils durch die Luftzufuhrleitung 32 in den zweiten Düsenkanal gefördert werden. Zum Schutz der Membranpumpe ist ein Membranventil 34 zwischen der Luftzufuhreinrichtung 8 und der zweiten Düse 10 angeordnet.

Die in die zweite Düse 10 mittels der Luftzufuhreinrichtung 8 geförderte Luft vermischt sich mit dem Wasserdampf in der zweiten Düse 10. Durch die in der zweiten Düse 10 erzeugte Saugwirkung durch die Strömung des Wasserdampfes entlang des zweiten Düsenkanals 18 wird die Pumpleistung der Luftzufuhreinrichtung 8 unterstützt.

Stromabwärts der zweiten Düse 10 ist eine erste Düse 4 mit einem ersten Düsenkanal 16 angeordnet. Im Bereich der engsten Stelle der ersten Düse 4 ist eine Saugöffnung 5 mit einem Durchmesser von 1.6 mm angeordnet, an die eine Milchzufuhrleitung 6 angeschlossen ist. Diese Milchzufuhrleitung 6 befindet sich in Strömungsverbindung mit einem Milchbehälter 7, wobei durch den Saugeffekt in der ersten Düse 4 Milch M gemäss dem angedeuteten Pfeil in die erste Düse gesaugt wird. Hierdurch wird die Milch M mit dem Gemisch aus Wasserdampf und Luft vermischt, so dass sich Schaum S bildet, der aus dem Auslass 33 aus der Vorrichtung 1 gemäss dem angedeuteten Pfeil gefördert wird.

Zur Steuerung und/oder Regelung der Vorrichtung 1 steht die stationäre Gerätekomponente 12 mit dem Steuermittel 19 und einem Speichermittel 20 steuer- und regeltechnisch in Wirkverbindung, beispielsweise zur Steuerung oder Regelung der Wasserpumpe 27, des Dampferzeugers 14 , des 2/2-Wegeventils 31 oder auch der Luftzufuhreinrichtung 8. Beispielsweise können hierdurch Betriebsparameter in der Vorrichtung 1 so gewählt werden, dass entweder Milchschaum oder erwärmte Milch aus dem Auslass 33 gefördert wird.

Eine mobile Komponente 13 umfassend zumindest die erste Düse 4 und den Auslass 33 ist lösbar mit der stationären Gerätekomponente 12 verbunden, was die Reinigung der Vorrichtung erleichtert, da bei bestimmungsgemässem Gebrauch lediglich die mobile Komponente 13 mit Milch in Kontakt kommt und entsprechend zu reinigen ist. Die Trennung zwischen stationärer Gerätekomponente 12 und mobiler Komponente 13 ist durch die Trennlinie 36 angedeutet.

Im Betrieb wird zur Herstellung von Milchschaum der zweiten Düse 10 Luft derart zugeführt, dass eine Strömung mit im Wesentlichen konstantem Verhältnis von Dampfvolumen zu Luftvolumen erzeugt wird. In der ersten Düse 4 wird durch das strömende Dampf-Luftgemisch Milch angesaugt und mit dem Dampf-Luftgemisch vermischt. In einer hier nicht gezeigten Mischkammer, die eine Erweiterung der Dampfzufuhrleitung 2 darstellt, erfolgt eine Entspannung, d. h. eine Druckreduzierung, wodurch der Milchschaum entsteht und anschliessend durch den Auslass 33 die Vorrichtung 1 verlässt.

Zur Herstellung warmer Milch wird im Betrieb wie auch bei der Herstellung von Milchschaum ein Dampfstrom in die Dampfzufuhrleitung 2 gefördert. Mittels der Luftzufuhreinrichtung 8 wird jedoch im Unterschied zur Herstellung von Milchschaum Luft pulsierend zugeführt. Hierdurch wird in der ersten Düse 4 eine geringere Milchmenge angesaugt, wodurch wenig Milchschaum und hauptsächlich erwärmte Milch produziert wird, die die Vorrichtung 1 durch den Auslass 33 verlässt.

Zur Herstellung warmer Milch kann alternativ zur pulsierenden Zuführung von Luft auch Luft derart zugeführt werden, so dass eine Strömung mit im Wesentlichen konstantem Verhältnis von Dampfvolumen zu Luftvolumen erzeugt wird. Hierzu wird ein Durchmesser der Saugöffnung 5 von 1.1 mm gewählt, im Gegensatz zur obigen Ausgestaltung mit einem Durchmesser der Saugöffnung 5 von 1.4 mm.

Zur Reinigung der Vorrichtung 1 wird mittels der Wasserpumpe 27 aus dem Wasserbehälter 24 dem Dampferzeuger 14 Wasser zugeführt, wobei die Heizleistung des Dampferzeugers reduziert wird, so dass keine Dampfbildung stattfindet, sondern lediglich erwärmtes Wasser erzeugt wird. Die Fliessgeschwindigkeit des Wassers wird mittels der Wasserpumpe 27 so eingestellt, dass die erste Düse 4 gereinigt wird, ohne dass Wasser durch die Saugöffnung 5 in die Milchzufuhrleitung 6 und dadurch in den Milchbehälter 7 gelangen kann. Somit erfolgt eine Reinigung der ersten Düse 4 im Wesentlichen von Milchrückständen.

Von hieran und im Folgenden werden gleiche Merkmale mit gleichen Referenzzeichen bezeichnet.

In Figur 2 ist in schematischer Darstellung eine erfindungsgemässe Vorrichtung 1 wie in Figur 1 dargestellt. Im Unterschied zur Figur 1 ist in der Vorrichtung gemäss Figur 2 keine Trennung in eine stationäre Gerätekomponente und eine mobile Komponente vorgesehen. Zudem ist die Luftzufuhreinrichtung 8 vorliegend als Magnetventil ausgebildet. Dieses ist öffenbar und schliessbar, wodurch der Luftstrom L in die zweite Düse 10 mit einem hier nicht gezeigten Steuermittel steuerbar oder regelbar ist.

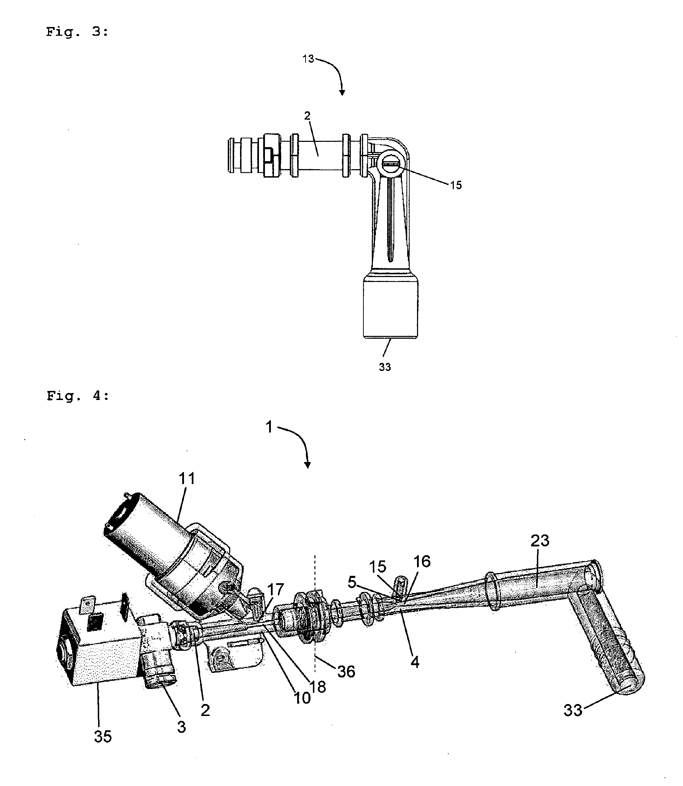

Figur 3 zeigt in einer Seitenansicht eine mobile Komponente 13, welche eine Krümmung von etwa 90° aufweist. Ein Milchzufuhrkanal 15, der beispielsweise an eine Milchzufuhrleitung anschliessbar ist, ist im Bereich der Krümmung angeordnet.

In Figur 4 ist in perspektivischer Darstellung ein Teilausschnitt der Vorrichtung 1 dargestellt. Über eine Dampfzufuhröffnung 3 wird der im hier nicht gezeigten Dampferzeuger produzierte Dampf in die Dampfzufuhrleitung 2 gefördert. Mittels der Luftpumpe 11, die hier als Luftzufuhreinrichtung fungiert, wird Luft über einen Luftzufuhrkanal 17, der im Wesentlichen senkrecht zum zweiten Düsenkanal 18 angeordnet ist, in die zweite Düse gefördert, wodurch ein Dampf-Luftgemisch gebildet wird. Anschliessend wird dieses Dampf-Luftgemisch in die erste Düse 4 mit der Saugöffnung 5 gefördert, wobei ein Milchzufuhrkanal 15 mit der Saugöffnung 5 verbunden ist. An diesen Milchzufuhrkanal 15 ist beispielsweise eine Milchzufuhrleitung anschliessbar. Stromabwärts der ersten Düse 4 wird das Dampf-Luft-Milchgemisch in eine Mischkammer 23 gefördert, welche senkrecht zur mittleren Strömungsrichtung eine grössere Ausdehnung als der stromaufwärts angeordnete Kanal aufweist, wodurch eine Entspannung, d. h. eine Druckerniedrigung, in dem Dampf-Luft-Milchgemisch erreicht wird. Anschliessend an die Mischkammer 23 wird der Schaum durch den Auslass 33 gefördert.

Mittels der Trennlinie 36 ist hier die Trennung der Vorrichtung in eine stationäre Gerätekomponente und eine mobile Komponente angedeutet.

Mittels eines Magnetventils 35 kann in Abhängigkeit von der Temperatur des Dampfes, die mit einem hier nicht dargestellten Sensor bestimmt wurde, die Dampfzufuhrleitung für die Dampfzufuhr geöffnet oder geschlossen werden. Der nicht dargestellte Temperatursensor ist im Dampferzeuger angeordnet.

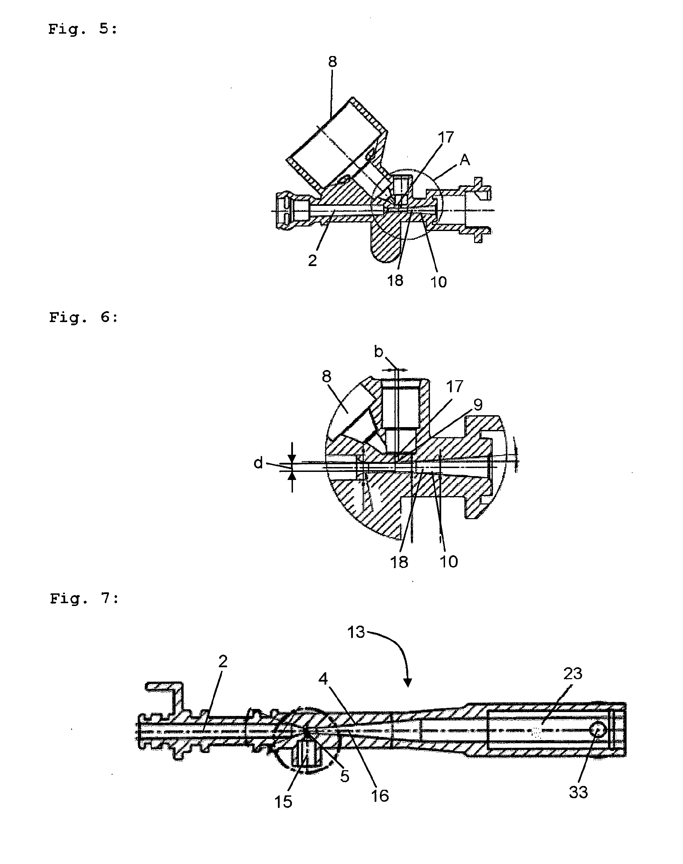

In Figur 5 ist in einer Schnittdarstellung ein Ausschnitt des Luftzufuhrbereichs gemäss Figur 4 dargestellt. Hier ist die im Wesentlichen senkrechte Anordnung des Luftzufuhrkanals 17 zum zweiten Düsenkanal 18 besser sichtbar.

In Figur 6 ist in Schnittdarstellung das Detail A der Figur 5 dargestellt, wobei hier die Luftzufuhröffnung 9 ebenfalls besser sichtbar ist.

Der zweite Düsenkanal 18 weist an der engsten Stelle einen minimalen Durchmesser d von 1.3 mm auf. Der Luftzufuhrkanal 17 ist als Schlitz mit einer Breite b von 0.5 mm ausgebildet.

In Figur 7 ist in einer Schnittdarstellung die mobile Komponente 13 dargestellt, wobei in dieser Schnittdarstellung die im Wesentlichen senkrechte Anordnung des Milchzufuhrkanals 15 zum ersten Düsenkanal 16 besser sichtbar ist. Der erste Düsenkanal 16 weist an der engsten Stelle einen minimalen Durchmesser von 1.45 mm auf.

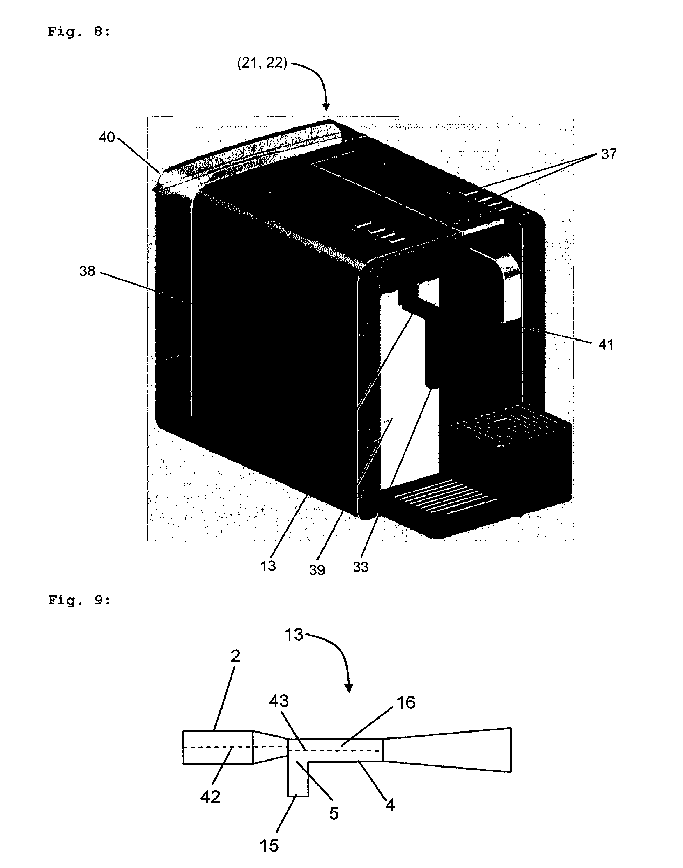

Ein Abschnitt des ersten Düsenkanals 16 der ersten Düse 4, der den Bereich der Saugöffnung 5 umfasst, ist exzentrisch zum Düsenkanal stromaufwärts des Abschnitts angeordnet. Im Detail ist dies in Figur 9 dargestellt.

In Figur 8 ist in perspektivischer Darstellung eine Kaffeemaschine 22 mit einem erfindungsgemässen Milchschäumer 21 dargestellt. Die Kaffeemaschine 22 und der Milchschäumer 21 umfassend die Vorrichtung gemäss Figur 4 sind in einem gemeinsamen Gehäuse 38 angeordnet. Auf der Oberseite des Gehäuses 38 sind Bedienelemente 37 angeordnet, mit denen beispielsweise ein gewünschtes Getränk oder auch eine Reinigung des Milchschäumers 21 oder der Kaffeemaschine 22 auswählbar sind.

Die Kaffeemaschine 22 weist einen Kaffeeauslass 41 zur Ausgabe eines Kaffeegetränks auf.

Ein Wassertank 40 zur Herstellung eines Kaffeegetränks, zur Dampferzeugung für das Milchgetränk oder zur Reinigung des Milchschäumers 21 oder der Kaffeemaschine 22 ist auf einer Rückseite der Maschine angeordnet.

Ein Milchtank 39 ist in die Maschine aufgenommen, wobei an dem Milchtank die mobile Komponente 13 mit dem Auslass 33 für erwärmte Milch oder Milchschaum angeordnet ist. Die mobile Komponente 13 fungiert als Griff zum Einsetzen oder Entnehmen des Milchtanks 39 in oder aus dem Milchschäumer 21. Die mobile Komponente 13 ist rotativ so gelagert, dass der Auslass 33 beispielsweise über einer Tasse, die unter dem Kaffeeauslass 41 positioniert ist, positioniert werden kann. Hierdurch kann bei entsprechender Funktionsauswahl mittels der Bedienelemente 37 ein Getränk wie Cappuccino oder Latte Macchiato automatisiert hergestellt werden.

Figur 9 zeigt in vergrösserter Darstellung schematisch den mit einem Kreis markierten Bereich der ersten Düse 4 gemäss Figur 7.

Der Abschnitt des ersten Düsenkanals 16 umfassend den Bereich der Saugöffnung 5 weist eine Düsenkanalachse 43 auf, die exzentrisch zum Dampfzufuhrkanal 2 mit der Dampfzufuhrleitungsachse 42 stromaufwärts des Abschnitts angeordnet ist. Der Dampfzufuhrkanal 2 geht stromaufwärts der Saugöffnung 5 in Umfangsrichtung abschnittsweise ohne Sprung in den ersten Düsenkanal 16 über.

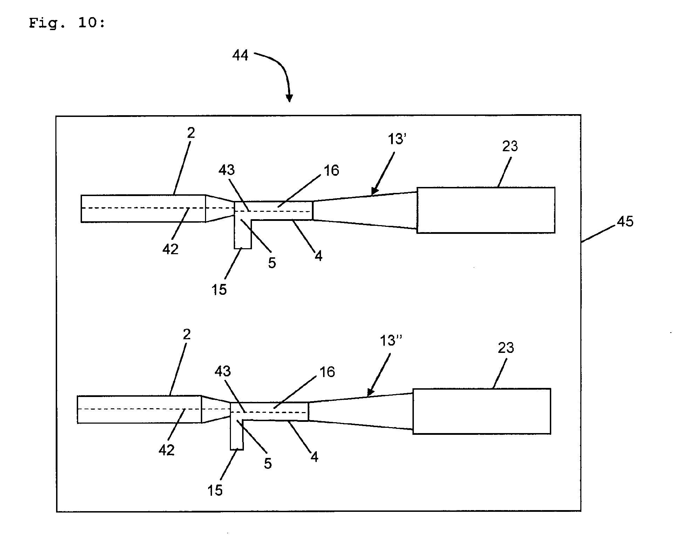

Figur 10 zeigt in schematischer Darstellung ein erfindungsgemässes Kit 44 in einer Verpackung 45 umfassend eine erste mobile Komponente 13' geeignet für die Milchschaumherstellung und eine zweite mobile Komponente 13" geeignet für die Herstellung erwärmter Milch bei Zuführung eines Dampf-Luft-Gemischs mit im Wesentlichen konstantem Volumenstrom. Der Querschnitt der Saugöffnung 5 der ersten mobilen Komponente 13' beträgt etwa 1.8 mm² und der Querschnitt der Saugöffnung 5 der zweiten mobilen Komponente 13" beträgt etwa 0.95 mm².

## Patentansprüche

1. Vorrichtung (1) zum Herstellen von Milchschaum und/oder erwärmter Milch, umfassend
- eine Dampfzufuhrleitung (2) mit einer Dampfzufuhröffnung (3), wobei die Dampfzufuhrleitung (2) eine sich verengende erste Düse (4) aufweist zur Erzielung eines Saugeffekts zur Ansaugung von Milch an einer in der ersten Düse (4) angeordneten Saugöffnung (5), wobei der Dampf insbesondere mittels eines insbesondere steuerbaren Dampferzeugers (14) erzeugbar ist,
- eine Luftzufuhreinrichtung (8) zur Zufuhr von Luft in die Dampfzufuhrleitung (2) durch eine Luftzufuhröffnung (9),
**dadurch gekennzeichnet, dass** die Dampfzufuhrleitung (2) eine sich verengende zweite Düse (10) aufweist zur Erzielung eines Saugeffekts an der in der zweiten Düse (10) angeordneten Luftzufuhröffnung (9), wobei die erste Düse (4) stromabwärts der zweiten Düse (10) bezogen auf die Dampfströmungsrichtung angeordnet ist.

2. Vorrichtung (1) nach Anspruch 1, **dadurch gekennzeichnet, dass** die erste Düse (4) an der engsten Stelle einen Querschnitt senkrecht zur Dampfströmungsrichtung grösser als die zweite Düse (10) an der engsten Stelle aufweist.

3. Vorrichtung (1) nach einem der Ansprüche 1 oder 2, **dadurch gekennzeichnet, dass** die Luftzufuhreinrichtung (8) eine Luftpumpe (11), insbesondere eine Membranluftpumpe, mit insbesondere variierbarer Pumpleistung umfasst.

4. Vorrichtung (1) nach einem der Ansprüche 1 bis 3, **dadurch gekennzeichnet, dass** die Luftzufuhreinrichtung (8) ein steuerbares und/oder regelbares Ventil umfasst zur Variierung der Menge der zuführbaren Luft.

5. Vorrichtung (1) nach einem der Ansprüche 1 bis 4, **dadurch gekennzeichnet, dass** die Saugöffnung (5) im Wesentlichen im Bereich der engsten Stelle der ersten Düse (4) angeordnet ist und / oder die Luftzufuhröffnung (9) im Wesentlichen im Bereich der engsten Stelle der zweiten Düse (10) angeordnet ist.

6. Vorrichtung (1) nach einem der Ansprüche 1 bis 5, **dadurch gekennzeichnet, dass** die Luftzufuhreinrichtung (8) als zur Umgebung offene Öffnung ausgebildet ist.

7. Vorrichtung (1) nach einem der Ansprüche 1 bis 6, **dadurch gekennzeichnet, dass** ein Abschnitt eines ersten Düsenkanals (16) der ersten Düse (4) entlang des Düsenkanals (16), der zumindest den Bereich der Saugöffnung (5) umfasst, exzentrisch zum Düsenkanal (16) stromaufwärts und / oder stromabwärts des Abschnitts angeordnet ist.

8. Vorrichtung (1) nach einem der Ansprüche 1 bis 7, **dadurch gekennzeichnet, dass** die zweite Düse (10) einen Luftzufuhrkanal (17) aufweist, der in einen zweiten Düsenkanal (18) der zweiten Düse (10) an der Position der Luftzufuhröffnung (9) mündet, wobei der Luftzufuhrkanal (17) und der zweite Düsenkanal (18) insbesondere im Wesentlichen senkrecht zueinander angeordnet sind.

9. Vorrichtung (1) nach einem der Ansprüche 1 bis 8, **dadurch gekennzeichnet, dass** die Vorrichtung (1) Steuermittel (19) aufweist, über die die Luftzufuhreinrichtung (8) und/oder der Dampferzeuger (14) zum Vorgeben des Mischungsverhältnisses des Dampf-Luft-Gemisches in der Dampfzufuhrleitung (3) steuerbar sind.

10. Vorrichtung (1) nach Anspruch 9, **dadurch gekennzeichnet, dass** die Vorrichtung (1) Speichermittel (20) aufweist zur Speicherung zumindest eines Betriebsparameters, insbesondere der Dampftemperatur, des Feuchtigkeitsgehalts des Dampfes, des Volumenstroms des Dampfes, der Pumpleistung der Luftzufuhreinrichtung (8), der Pumpleistung der Wasserpumpe, der Heizleistung der Dampfheizung oder beliebigen Kombinationen daraus für zumindest zwei Milchbehandlungsarten, welche durch die Steuermittel (19) verwendbar sind.

11. Milchschäumer (21) umfassend eine Vorrichtung gemäss einem der vorstehenden Ansprüche.

12. Kaffeemaschine (22) umfassend eine Vorrichtung gemäss einem der Ansprüche 1 bis 10 und/oder mit einem Milchschäumer (21) gemäss Anspruch 11.

13. Verfahren zum Herstellen von Milchschaum mittels einer Vorrichtung (1), gemäss einem der Ansprüche 1 bis 10, mit den folgenden Schritten:
- Erzeugen eines Dampfstromes mittels eines Dampferzeugers (14),
- Leiten des Dampfes durch eine Dampfzufuhröffnung (3) in eine Dampfzufuhrleitung (2),
- Zuführen von Luft in die Dampfzufuhrleitung (2) durch eine Luftzufuhröffnung (9) in eine sich verengende zweite Düse (10), derart, dass eine Strömung mit im Wesentlichen konstantem Verhältnis von Dampfvolumen zu Luftvolumen erzeugt wird,
- Ansaugen von Milch aus einem Milchbehälter (7) in einer sich verengenden ersten Düse (4), die mittels einer Milchzufuhrleitung (6) miteinander in Strömungsverbindung stehen, mittels der zugeführten Strömung,
- Herstellen von Milchschaum.

14. Verfahren zum Herstellen von erwärmter Milch mittels einer Vorrichtung (1), gemäss einem der Ansprüche 1 bis 10, mit den folgenden Schritten:
- Erzeugen eines Dampfstromes mittels eines Dampferzeugers (14),
- Leiten des Dampfes durch die Dampfzufuhröffnung (3) in die Dampfzufuhrleitung (2),
- Zuführen von Luft in die Dampfzufuhrleitung (2) durch eine Luftzufuhröffnung (9) in eine sich verengende zweite Düse (10) mit pulsierendem Volumenstrom,
- Ansaugen von Milch aus einem Milchbehälter (7) in einer sich verengenden ersten Düse (4), die mittels einer Milchzufuhrleitung (6) miteinander in Strömungsverbindung stehen, mittels des zugeführten pulsierenden Volumenstroms,
- Herstellen von erwärmter Milch.

15. Kit (44) zur Verwendung mit einer stationären Gerätekomponente (12), welche eine zweite Düse (10) umfasst zur Bildung einer Vorrichtung (1) zum Herstellen von Milchschaum und/oder erwärmter Milch gemäss einem der Ansprüche 1 bis 10 und insbesondere zur Verwendung in einem Verfahren gemäss Anspruch 13 oder 14, **dadurch gekennzeichnet, dass** das Kit (44) zumindest eine erste mobile Komponente (13') enthaltend eine erste Düse (4) mit einem Querschnitt einer Saugöffnung (5) und eine zweite mobile Komponente (13") enthaltend eine weitere erste Düse (4) mit einem Querschnitt der Saugöffnung (5) zur Ansaugung von Milch umfasst, wobei die Saugöffnung (5) der ersten mobilen Komponente (13') einen Querschnitt geeignet zur Herstellung von Milchschaum bei Zuführung eines Dampf-Luft-Gemischs mit im Wesentlichen konstantem Volumenstrom aufweist, wobei die Saugöffnung (5) der zweiten mobilen Komponente (13") einen Querschnitt geeignet zur Herstellung von erwärmter Milch bei Zuführung eines Dampf-Luft-Gemischs mit im Wesentlichen konstantem Volumenstrom aufweist, und wobei der Querschnitt der Saugöffnung (5) der zweiten mobilen Komponente (13") kleiner als der Querschnitt der Saugöffnung (5) der ersten mobilen Komponente (13') ist.

## Claims

1. Device (1) for producing milk foam and/or heated milk, comprising
- a steam supply line (2) with a steam supply opening (3), wherein the steam supply line (2) has a first constricting nozzle (4) for producing a suction effect for sucking up milk at a suction opening (5) arranged in the first nozzle (4), wherein the steam can be generated in particular by means of an in particular controllable steam generator (14),
- an air supply device (8) for supplying air to the steam supply line (2) through an air supply opening (9),
**characterized in that** the steam supply line (2) has a second constricting nozzle (10) for producing a suction effect at the air supply opening (9) arranged in the second nozzle (10), wherein the first nozzle (4) is arranged downstream of the second nozzle (10) with respect to the steam flow direction.

2. Device (1) according to Claim 1, **characterized in that** the first nozzle (4) has a cross section perpendicular to the steam flow direction that is greater at the narrowest point than the second nozzle (10) at the narrowest point.

3. Device (1) according to either of Claims 1 and 2, **characterized in that** the air supply device (8) comprises an air pump (11), in particular a diaphragm air pump, with an in particular variable pumping capacity.

4. Device (1) according to one of Claims 1 to 3, **characterized in that** the air supply device (8) comprises a controllable and/or regulable valve for varying the amount of air which can be supplied.

5. Device (1) according to one of Claims 1 to 4, **characterized in that** the suction opening (5) is substantially arranged in the region of the narrowest point of the first nozzle (4), and/or the air supply opening (9) is substantially arranged in the region of the narrowest point of the second nozzle (10).

6. Device (1) according to one of Claims 1 to 5, **characterized in that** the air supply device (8) is designed as an opening which is open to the surroundings.

7. Device (1) according to one of Claims 1 to 6, **characterized in that** a portion of a first nozzle duct (16) of the first nozzle (4) along the nozzle duct (16), which portion comprises at least the region of the suction opening (5), is arranged eccentrically with respect to the nozzle duct (16) upstream and/or downstream of the portion.

8. Device (1) according to one of Claims 1 to 7, **characterized in that** the second nozzle (10) has an air supply duct (17) which opens into a second nozzle duct (18) of the second nozzle (10) at the position of the air supply opening (9), wherein the air supply duct (17) and the second nozzle duct (18) are in particular arranged substantially perpendicularly to each other.

9. Device (1) according to one of Claims 1 to 8, **characterized in that** the device (1) has control means (19) via which the air supply device (8) and/or the steam generator (14) for predetermining the mixing ratio of the steam/air mixture in the steam supply line (3) can be controlled.

10. Device (1) according to Claim 9, **characterized in that** the device (1) has memory means (20) for storing at least one operating parameter, in particular the steam temperature, the moisture content of the steam, the volumetric flow of the steam, the pumping capacity of the air supply device (8), the pumping capacity of the water pump, the heating capacity of the steam heating or any combinations thereof for at least two types of milk treatment, which memory means can be used by the control means (19).

11. Milk frother (21) comprising a device according to one of the preceding claims.

12. Coffee machine (22) comprising a device according to one of Claims 1 to 10 and/or with a milk frother (21) according to Claim 11.

13. Method for producing milk foam by means of a device (1) according to one of Claims 1 to 10, with the following steps:
- generating a stream of steam by means of a steam generator (14),
- conducting the steam through a steam supply opening (3) into a steam supply line (2),
- supplying air to the steam supply line (2) through an air supply opening (9) into a constricting second nozzle (10) in such a manner that a flow having a substantially constant ratio of steam volume to air volume is produced,
- sucking milk out of a milk container (7) in a constricting first nozzle (4), which milk container and nozzle are connected to each other in terms of flow by means of a milk supply line (6), by means of the supplied flow,
- producing milk foam.

14. Method for producing heated milk by means of a device (1) according to one of Claims 1 to 10, with the following steps:
- generating a stream of steam by means of a steam generator (14),
- conducting the steam through the steam supply opening (3) into the steam supply line (2),
- supplying air with a pulsating volumetric flow to the steam supply line (2) through an air supply opening (9) into a constricting second nozzle (10),
- sucking milk out of a milk container (7) in a constricting first nozzle (4), which milk container and nozzle are connected to each other in terms of flow by means of a milk supply line (6), by means of the supplied pulsating volumetric flow,
- producing heated milk.

15. Kit (44) for use with a stationary apparatus component (12) which comprises a second nozzle (10) for forming a device (1) for producing milk foam and/or heated milk according to one of Claims 1 to 10 and in particular for use in a method according to Claim 13 or 14, **characterized in that** the kit (44) comprises at least one first mobile component (13') containing a first nozzle (4) with a cross section of a suction opening (5) for sucking up milk, and a second mobile component (13") containing a further first nozzle (4) with a cross section of the suction opening (5) for sucking up milk, wherein the suction opening (5) of the first mobile component (13') has a cross section suitable for producing milk foam when a steam/air mixture with a substantially constant volumetric flow is supplied, wherein the suction opening (5) of the second mobile component (13") has a cross section suitable for producing heated milk when a steam/air mixture with a substantially constant volumetric flow is supplied, and wherein the cross section of the suction opening (5) of the second mobile component (13") is smaller than the cross section of the suction opening (5) of the first mobile component (13').

## Revendications

1. Dispositif (1) de fabrication de mousse de lait et/ou de lait chauffé, comprenant :
un conduit d'amenée de vapeur (2) doté d'une ouverture d'amenée de vapeur (3), le conduit d'amenée de vapeur (2) comportant :
- une première buse (4) se rétrécissant pour atteindre un effet d'aspiration permettant d'aspirer le lait se trouvant au niveau d'une ouverture d'aspiration (5) disposée dans la première buse (4), la vapeur pouvant notamment être produite à l'aide d'un système de production de vapeur (14) commandable ;
- un dispositif d'amenée d'air (8) servant à amener de l'air dans le conduit d'amenée de vapeur (2) à travers une ouverture d'amenée d'air (9) ;
**caractérisé en ce que** le conduit d'amenée de vapeur (2) comporte une deuxième buse (10) se rétrécissant pour atteindre un effet d'aspiration au niveau de l'ouverture d'amenée d'air (9) disposée dans la deuxième buse (10), la première buse (4) étant disposée en aval de la deuxième buse (10) par rapport à la direction d'écoulement de la vapeur.

2. Dispositif (1) selon la revendication 1, **caractérisé en ce que** la première buse (4) comporte, au niveau du point le plus étroit, une section transversale perpendiculaire à la direction d'écoulement de la vapeur supérieure à celle de la deuxième buse (10) au niveau du point le plus étroit.

3. Dispositif (1) selon l'une quelconque des revendications 1 ou 2, **caractérisé en ce que** le dispositif d'amenée d'air (8) comprend une pompe à air (11), notamment une pompe à air à membrane, avec notamment une puissance de pompage variable.

4. Dispositif (1) selon l'une quelconque des revendications 1 à 3, **caractérisé en ce que** le dispositif d'amenée d'air (8) comprend une soupape commandable et/ou réglable permettant de faire varier la quantité d'air pouvant être amené.

5. Dispositif (1) selon l'une quelconque des revendications 1 à 4, **caractérisé en ce que** l'ouverture d'aspiration (5) est disposée pour l'essentiel dans la région du point le plus étroit de la première buse (4) et/ou que l'ouverture d'amenée d'air (9) est disposée pour l'essentiel dans la région du point le plus étroit de la deuxième buse (10).

6. Dispositif (1) selon l'une quelconque des revendications 1 à 5, **caractérisé en ce que** le dispositif d'amenée d'air (8) prend la forme d'une ouverture s'ouvrant vers l'environnement.

7. Dispositif (1) selon l'une quelconque des revendications 1 à 6, **caractérisé en ce qu'**une section d'un premier canal de buse (16) de la première buse (4) est disposée le long du canal de buse (16) comprenant au moins la région de l'ouverture d'aspiration (5) excentrée par rapport au canal de buse (16) en amont et/ou en aval de la section.

8. Dispositif (1) selon l'une quelconque des revendications 1 à 7, **caractérisé en ce que** la deuxième buse (10) comporte un canal d'amenée d'air (17) débouchant dans un deuxième canal de buse (18) de la deuxième buse (10) au niveau de la position de l'ouverture d'amenée d'air (9), le canal d'amenée d'air (17) et le deuxième canal de buse (18) étant notamment disposés pour l'essentiel perpendiculairement l'un par rapport à l'autre.

9. Dispositif (1) selon l'une quelconque des revendications 1 à 8, **caractérisé en ce que** le dispositif (1) comporte des moyens de commande (19) via lesquels le dispositif d'amenée d'air (8) et/ou le système de production de vapeur (14) peuvent être commandés pour déterminer le rapport de mélange du mélange air-vapeur dans le conduit d'amenée de vapeur (3).

10. Dispositif (1) selon la revendication 9, **caractérisé en ce que** le dispositif (1) comporte des moyens de mémorisation (20) permettant de mémoriser au moins un paramètre de fonctionnement, notamment la température de la vapeur, le taux d'humidité de la vapeur, le débit volumique de la vapeur, la puissance de pompage du dispositif d'amenée d'air (8), la puissance de pompage de la pompe à eau, la puissance de chauffe du système de chauffage de la vapeur ou des combinaisons quelconques de ceux-ci, pour au moins deux types de traitement du lait pouvant être appliqués par le biais des moyens de commande (19).

11. Mousseur de lait (21) comprenant un dispositif selon l'une quelconque des revendications précédentes.

12. Machine à café (22) comprenant un dispositif selon l'une quelconque des revendications 1 à 10 et/ou un mousseur de lait (21) selon la revendication 11.

13. Procédé de fabrication de mousse de lait à l'aide d'un dispositif (1) selon l'une quelconque des revendications 1 à 10, avec les étapes suivantes :
- production d'un flux de vapeur à l'aide d'un système de production de vapeur (14) ;
- conduction de la vapeur à travers une ouverture d'amenée de vapeur (3) jusque dans un conduit d'amenée de vapeur (2) ;
- amenée d'air dans le conduit d'amenée de vapeur (2) à travers une ouverture d'amenée d'air (9) contenue dans une deuxième buse (10) se rétrécissant, de façon à produire un flux présentant un rapport pour l'essentiel constant de volume de vapeur sur volume d'air ;
- aspiration de lait dans une première buse (4) se rétrécissant, à partir d'un réservoir de lait (7), lesdits éléments étant maintenus en liaison de flux à l'aide d'un conduit d'amenée de lait (6), à l'aide du flux amené ;
- fabrication de mousse de lait.

14. Procédé de fabrication de lait chauffé à l'aide d'un dispositif (1) selon l'une quelconque des revendications 1 à 10, avec les étapes suivantes :
- production d'un flux de vapeur à l'aide d'un système de production de vapeur (14) ;
- conduction de la vapeur à travers l'ouverture d'amenée de vapeur (3) jusque dans le conduit d'amenée de vapeur (2) ;
- amenée d'air dans le conduit d'amenée de vapeur (2) à travers une ouverture d'amenée d'air (9) pratiquée dans une deuxième buse (10) se rétrécissant, avec un débit volumique pulsé ;
- aspiration de lait à partir d'un réservoir de lait (7) dans une première buse (4) se rétrécissant, lesdits éléments étant maintenus en liaison de flux à l'aide d'un conduit d'amenée de lait (6), à l'aide du flux pulsé amené ;
- fabrication de lait chauffé.

15. Kit (44) d'utilisation avec un composant d'appareil (12) fixe comprenant une deuxième buse (10) pour la formation d'un dispositif (1) de fabrication de mousse de lait et/ou de lait chauffé selon l'une quelconque des revendications 1 à 10 et notamment d'utilisation dans un procédé selon la revendication 13 ou 14, **caractérisé en ce que** le kit (44) comprend au moins un premier composant mobile (13') contenant une première buse (4) avec une section transversale d'ouverture d'aspiration (5) et un deuxième composant mobile (13") contenant une première buse (4) supplémentaire avec une section transversale d'ouverture d'aspiration (5) permettant d'aspirer le lait, l'ouverture d'aspiration (5) du premier composant mobile (13') comportant une section transversale adaptée à la fabrication de mousse de lait en présence d'amenée d'un mélange air-vapeur avec pour l'essentiel un débit volumique constant, l'ouverture d'aspiration (5) du deuxième composant mobile (13") présentant une section transversale adaptée à la fabrication de lait chauffé par amenée d'un mélange air-vapeur avec un débit volumique pour l'essentiel constant et la section transversale de l'ouverture d'aspiration (5) du deuxième composant mobile (13") étant inférieure à la section transversale de l'ouverture d'aspiration (5) du premier composant mobile (13').
